(19) Europäisches Patentamt
European Patent Office
Office européen des brevets

(11) **EP 4 220 321 A1**

(12) **EUROPÄISCHE PATENTANMELDUNG**

(43) Veröffentlichungstag:
**02.08.2023   Patentblatt 2023/31**

(21) Anmeldenummer: **22153511.5**

(22) Anmeldetag: **26.01.2022**

(51) Internationale Patentklassifikation (IPC):
**G05B 23/02** *(2006.01)*

(52) Gemeinsame Patentklassifikation (CPC):
**G05B 23/0254**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **COMPUTER-IMPLEMENTIERTES VERFAHREN ZUR ERKENNUNG VON ABWEICHUNGEN IN EINEM HERSTELLUNGSPROZESS**

(57)    Computer-implementiertes Verfahren zur Erkennung von Abweichungen in einem Herstellungsprozess mit Prozessparametern, wobei eine Rechenvorrichtung mit einem Speicher vorgesehen ist, wobei folgende Schritte ausführt werden:

a) Bereitstellen von Referenz-Prozessdaten eines Referenz-Herstellungsprozesses, welcher Referenz-Parameter des Herstellungsprozesses umfasst,

b) Erzeugen und Trainieren eines Prozess-Modells mit Modell-Knoten und zugeordneten Modell-Gewichten ($MG_i$) auf Basis eines Autoencoders mit den Referenz-Prozessdaten,

c) Zumindest teilweises Zuordnen von Modell-Knoten des Prozess-Modells zu Prozessparametern des Herstellungsprozesses,

d) Bereitstellen von aktuellen Prozessdaten aus einem aktuellen Herstellungsprozess, welcher aktuelle Parameter des Herstellungsprozesses umfasst,

e) Ermitteln von Prozess-Abweichungen der aktuellen Prozessdaten mithilfe des Prozess-Modells durch Bestimmung eines Rekonstruktionsfehlers und Ausgeben der Modell-Gewichte ($MG_i$) der Modell-Knoten,

f) Schätzen des zukünftigen Verlaufs des Rekonstruktionsfehlers,

g) Prüfen, ob der geschätzte zukünftige Verlauf des Rekonstruktionsfehlers für die vorbestimmte Zeitdauer innerhalb eines vorbestimmten Wertebereichs liegt, falls Ja (J), fortsetzen bei Schritt d), sonst (N) Ausgeben eines Alarms (AL).

FIG 1

EP 4 220 321 A1

**Beschreibung**

Die Erfindung betrifft ein computer-implementiertes Verfahren, eine Rechenvorrichtung und ein System zur Erkennung von Abweichungen in einem Herstellungsprozess mit Prozessparametern wobei eine Rechenvorrichtung mit einem Speicher vorgesehen ist.

Ferner betrifft die Erfindung ein Computerprogramm, einen elektronisch lesbaren Datenträger und ein Datenträgersignal.

Chargenprozesse (engl. "batch") finden sich im Allgemeinen in Industrien, die kleine Materialmengen herstellen, die durch chemische, elektrochemische oder biologische Reaktionen hergestellt werden. Die Steuerung von Chargenprozessen ist ein sehr komplexer und kontinuierlicher Prozess.

Eine "Goldene Charge", definiert als Referenz. Die Goldene Chargen-Kennzeichnung ermöglicht es, eine Anlagenprozess-Betriebskurve zu erreichen, welche ein optimale Produktmischung zusammen mit einer verbesserten Qualität des Endprodukts liefert.

Eine Hauptkomponentenanalyse (PCA, engl. "Principle Component Analysis") ist das Werkzeug zur Analyse des Datensatzes. Die Hauptkomponentenanalyse (PCA) wird zur Dimensionsreduktion verwendet. Das bedeutet, dass der Golden Batch in Echtzeit in einem 2D-Plot beobachtet und beispielsweise die Abweichung des 95 Konfidenzintervalls (CI) vom Golden Batch ermittelt werden kann. Eine Abweichung zeigt dann an, dass ein Eingriff in den Prozess notwendig ist.

In derzeitige Verfahren können jedoch Nachteile auftreten. So ist beispielsweise mit der Hauptkomponentenanalyse die Identifizierung einzelner Driftparameter nicht möglich, lediglich aufwändige nachträgliche statistische Messungen.

Ferner können häufig ein einzelner abweichender Prozessparameter oder eine kleine Anzahl von abweichenden Prozessparametern nicht erkannt werden, da sie die Hauptkomponentenanalyse nicht dazu bringen, Grenzen der Analyse zu überschreiten.

Außerdem haben Batch-Prozesse oft eine unterschiedliche Reifezeit, da die Hauptkomponentenanalyse pro Zeitpunkt berechnet wird, wobei eine Berücksichtigung der Chargenreife erforderlich ist.

Es ist daher Aufgabe der Erfindung die genannten Nachteile zu überwinden.

Die erfindungsgemäße Aufgabe wird durch ein Verfahren eingangs genannter Art gelöst, wobei folgende Schritte ausführt werden:

a) Bereitstellen von Referenz-Prozessdaten eines Referenz-Herstellungsprozesses, welcher Referenz-Parameter des Herstellungsprozesses umfasst, an die Rechenvorrichtung,

b) Erzeugen und Trainieren eines Prozess-Modells mit Modell-Knoten und zugeordneten Modell-Gewichten auf Basis eines Autoencoders mit den Referenz-Prozessdaten,

c) Zumindest teilweises Zuordnen von Modell-Knoten des Prozess-Modells zu Prozessparametern des Herstellungsprozesses,

d) Bereitstellen von aktuellen Prozessdaten aus einem aktuellen Herstellungsprozess, welcher aktuelle Parameter des Herstellungsprozesses umfasst, an die Rechenvorrichtung,

e) Ermitteln von Prozess-Abweichungen der aktuellen Prozessdaten mithilfe des Prozess-Modells durch Bestimmung eines Rekonstruktionsfehlers durch die Rechenvorrichtung, und Ausgeben der Modell-Gewichte der Modell-Knoten,

f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher als zumindest ein vorher bestimmter Rekonstruktionsfehler für eine nachfolgende Schätzung,

g) Prüfen, ob der geschätzte zukünftige Verlauf des Rekonstruktionsfehlers für die vorbestimmte Zeitdauer innerhalb eines vorbestimmten Wertebereichs liegt, falls Ja, fortsetzen bei Schritt d), sonst Ausgeben eines Alarms.

Dadurch ist es möglich, individuelle Abweichungen in ProzessParametern zu identifizieren.

Ferner ist es möglich, die Reaktionszeit, also die Zeit bis zum Ergreifen einer entsprechend notwendigen Maßnahme, zu erfassen.

Außerdem wird eine Feedback-Schleife mit einem Kontrollsystem geschaffen, um eine entsprechende Maßnahme zu ergreifen, sowie eine Rückmeldung von Drift-Parametern zu erlauben.

Die Rechenvorrichtung kann also beispielsweise bei einem Alarm dem Herstellungsprozess durch eine Rückkoppelschleife melden, dass sich der Herstellungsprozess aktuell vom Referenz-Herstellungsprozess unterscheidet und dementsprechende Maßnahmen können rasch ausgeführt werden, um den Herstellungsprozess wieder dem Referenz-Herstellungsprozess anzunähern. Dies kann durch Stellgrößen erfolgen, beispielsweise indem ein Bearbeitungsgeschwindigkeit innerhalb des Referenz-Herstellungsprozesses angepasst wird.

Dadurch folgt, dass keine weiteren Beurteilungen zur Chargenreife mehr notwendig sind.

Ein Autoencoder ist ein künstliches neuronales Netz, welches dazu genutzt wird, effiziente Codierungen zu lernen. Das Ziel eines Autoencoders ist es, eine komprimierte Repräsentation (Encoding) für einen Satz Daten zu lernen und somit auch wesentliche Merkmale zu extrahieren. Dadurch kann er zur Dimensionsreduktion genutzt werden.

Ein Autoencoder benutzt drei oder mehr Schichten, nämlich eine Eingabeschicht mit Eingabe-Knoten oder Neuronen, einige signifikant kleinere Schichten, die das Encoding bilden, und eine Ausgabeschicht, in der jedes Neuron die gleiche Bedeutung hat wie das entsprechende in der Eingabeschicht.

Wenn lineare Neuronen, das heißt lineare Modell-Knoten, benutzt werden, ist ein Autoencoder einer Hauptkomponentenanalyse sehr ähnlich.

In einer Weiterbildung der Erfindung ist es zusätzlich vorgesehen, dass im Autoencoder nichtlineare Modell-Knoten verwendet werden.

Nichtlinearität von Neuronen, das heißt nichtlineare Modell-Knoten, bedeutet, dass die Ausgabe an einem beliebigen Neuron nicht aus einer linearen Funktion der Eingabe reproduziert werden kann.

Dies wird durch die Verwendung einer geeigneten Aktivierungsfunktion erreicht, wie zum Beispiel eine Sigmoid- oder eine ReLU-Funktion.

Eine Sigmoidfunktion, Schwanenhalsfunktion, Fermifunktion oder S-Funktion ist eine mathematische Funktion mit einem S-förmigen Graphen. Im Allgemeinen ist eine Sigmoidfunktion eine beschränkte und differenzierbare reelle Funktion mit einer durchweg positiven oder durchweg negativen ersten Ableitung und genau einem Wendepunkt. Sigmoidfunktionen können in künstlichen neuronalen Netzen als Aktivierungsfunktion verwendet werden, da der Einsatz von differenzierbaren Funktionen die Verwendung von Lernmechanismen ermöglicht. Als Aktivierungsfunktion eines künstlichen Neurons wird die Sigmoidfunktion auf die Summe der gewichteten Eingabewerte angewendet, um die Ausgabe des Neurons zu erhalten.

Im Kontext künstlicher neuronaler Netze ist ein "Rectifier" (deutsch "Gleichrichter") eine Aktivierungsfunktion eines künstlichen Neurons. Diese Aktivierungsfunktion kann genutzt werden, um spezifische Erregung und unspezifische Hemmung zu trennen. Ein Training tiefer Netzwerke mit rektifizierenden Aktivierungsfunktionen ist erfolgreicher als beispielsweise mit der Sigmoidfunktion. Eine Einheit, die den Rectifier verwendet, wird auch als "rectified linear unit" (ReLU) bezeichnet.

Durch eine Nichtlinearität in Aktivierungsfunktionen in einem neuronalen Netzwerk kann eine nichtlineare Entscheidungsgrenze über nichtlineare Kombinationen des Gewichts und der Eingaben erzeugt werden und im Gegensatz zur Hauptkomponentenanalyse können komplexere, nichtlineare Zusammenhänge zwischen den Prozessparametern abgebildet werden.

In einer Weiterbildung der Erfindung ist es vorgesehen, dass der zumindest eine vorher bestimmte Rekonstruktionsfehler im Schritt f) Null beträgt, falls der Verfahrensschritt f) erstmalig ausgeführt wird.

In einer Weiterbildung der Erfindung ist es vorgesehen, dass das Schätzen mithilfe eines Regressionsverfahrens erfolgt.

Die erfindungsgemäße Aufgabe wird auch durch eine Rechenvorrichtung zur Erkennung von Abweichungen in einem Herstellungsprozess mit Prozessparametern gelöst, umfassend eine Rechenvorrichtung mit einem Speicher, welche dazu eingerichtet ist das erfindungsgemäße Verfahren auszuführen.

Die erfindungsgemäße Aufgabe wird auch durch ein System zur Erkennung von Abweichungen in einem Herstellungsprozess mit Prozessparametern gelöst, umfassend eine Produktionsanlage und eine erfindungsgemäße Vorrichtung.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1    ein Ausführungsbeispiel für ein Flussdiagramm für das erfindungsgemäße Verfahren,

Fig. 2    ein Ausführungsbeispiel für ein erfindungsgemäßes System,

Fig. 3    ein Beispiel für ein Autoencoder-Prozess-Modell.

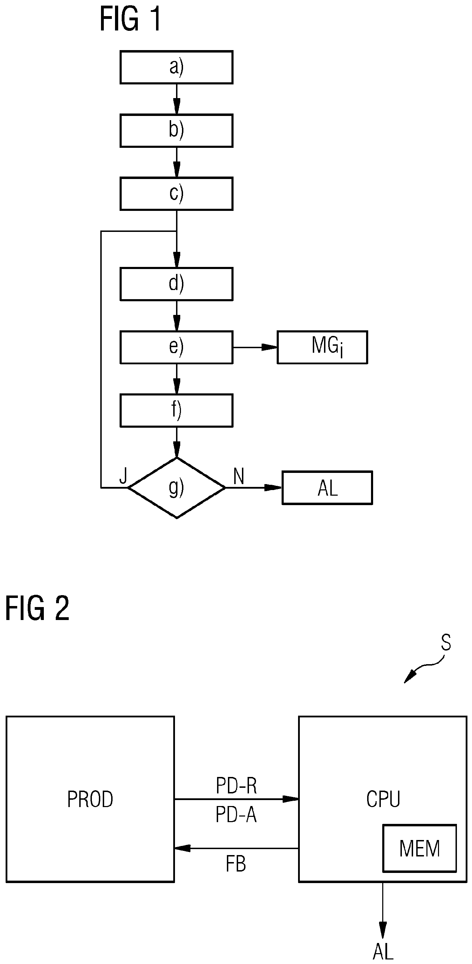

**Fig. 1** zeigt ein Ausführungsbeispiel für ein Flussdiagramm für das erfindungsgemäße Verfahren.

Das Verfahren zur Erkennung von Abweichungen in einem Herstellungsprozess mit Prozessparametern ist in einer Rechenvorrichtung CPU mit einem Speicher MEM computerimplementiert.

Ein Prozessparameter kann beispielsweise Betriebstemperatur, Betriebsdruck, Stromaufnahme oder Produkteigenschaften des hergestellten Produkts wie erfasste Abmessungen des hergestellten Produkts sein.

Ein Prozessparameter kann durch eine Messgröße mithilfe eines entsprechenden Sensor-Mittels durch eine Rechenvorrichtung erfasst werden, sowie durch eine Stellgröße mithilfe eines entsprechenden Aktuator-Mittels beispielsweise durch eine Rechenvorrichtung gesteuert werden.

Der Herstellungsprozess mit Prozessparametern kann beispielsweise mehrere Prozessschritte aufweisen, welche durch die Prozessparameter einzeln oder gemeinsam konfigurierbar sind.

Es ist aber auch möglich, dass die Prozessparameter lediglich einen einzigen Prozessschritt spezifizieren.

Ferner sind Kombinationen von mehreren Prozessparametern mit einem oder mehreren Prozessschritten möglich.

Folgende Schritte werden dabei ausführt:

a) Bereitstellen von Referenz-Prozessdaten eines Referenz-Herstellungsprozesses, welcher Referenz-Parameter des Herstellungsprozesses umfasst, an die Rechenvorrichtung CPU,

b) Erzeugen und Trainieren eines Prozess-Modells PM mit Modell-Knoten $MK_i$ und zugeordneten Modell-Gewichten $MG_i$ auf Basis eines Autoencoders mit den Referenz-Prozessdaten, wobei der Autoencoder auf linearen oder nichtlinearen Modell-Knoten $MK_i$ basiert,

c) Zumindest teilweises Zuordnen von Modell-Knoten des Prozess-Modells zu Prozessparametern des Herstellungsprozesses,

d) Bereitstellen von aktuellen Prozessdaten aus einem aktuellen Herstellungsprozess, welcher aktuelle Parameter des Herstellungsprozesses umfasst, an die Rechenvorrichtung CPU,

e) Ermitteln von Prozess-Abweichungen der aktuellen Prozessdaten mithilfe des Prozess-Modells durch Bestimmung eines Rekonstruktionsfehlers und Ausgeben der Modell-Gewichte $MG_i$ der Modell-Knoten $MK_i$,

f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher MEM als zumindest ein vorher bestimmter Rekonstruktionsfehler für eine nachfolgende Schätzung,

g) Prüfen, ob der geschätzte zukünftige Verlauf des Rekonstruktionsfehlers für die vorbestimmte Zeitdauer innerhalb eines vorbestimmten Wertebereichs liegt, falls ja, fortsetzen bei Schritt d), sonst Ausgeben eines Alarms AL.

Durch die Schritte d) bis g) ist eine bedingte Wiederholungsschleife gebildet.

Im ersten Durchlauf liegt noch kein bereits bestimmter Rekonstruktionsfehler im Speicher MEM vor. Daher wird der zumindest eine vorher bestimmte Rekonstruktionsfehler im Schritt f) mit Null angenommen, falls der Schritt f) erstmalig ausgeführt wird. Dies entspricht der Annahme, dass der Referenz-Herstellungsprozess im Schritt a) die Bezugsgröße bildet und daher noch keine Abweichung ausweist.

Das Schätzen erfolgt beispielsweise mithilfe eines Regressionsverfahrens.

Es ist besonders vorteilhaft, für den Autoencoder nichtlineare Modell-Knoten $MK_i$ einzusetzen, da dadurch eine nichtlineare Entscheidungsgrenze über nichtlineare Kombinationen des Gewichts und der Eingaben erzeugt werden können.

**Fig. 2** stellt ein Ausführungsbeispiel für ein erfindungsgemäßes System S dar.

Eine Produktionsanlage PROD führt einen Herstellungsprozess aus, erzeugt dabei Prozessdaten, beispielsweise durch Sensoren und stellt diese Prozessdaten einer Rechenvorrichtung CPU mit einem Speicher MEM bereit.

Die Prozessdaten können entweder Referenz-Daten PD-R sein, welche bei Ausführung eines Referenz-Herstellungsprozesses erzeugt werden.

Andererseits können die Prozessdaten aktuelle ProzessDaten PD-A sein, welche fortlaufend bei Ausführung eines Referenz-Herstellungsprozesses erzeugt werden und einen jeweils aktuell ausgeführten Herstellungsprozess abbilden.

Ist die Prüfung, ob der geschätzte zukünftige Verlauf des Rekonstruktionsfehlers für die vorbestimmte Zeitdauer innerhalb eines vorbestimmten Wertebereichs liegt, negativ, wird ein Alarms AL ausgegeben.

Optional kann die Rechenvorrichtung CPU bei einem Alarm der Produktionsanlage PROD, das heißt dem Herstellungsprozess, durch eine Rückkoppelschleife FB eine entsprechende Steuer-Operation melden, welche zu einer Reduktion des Reduktionsfehlers führen soll.

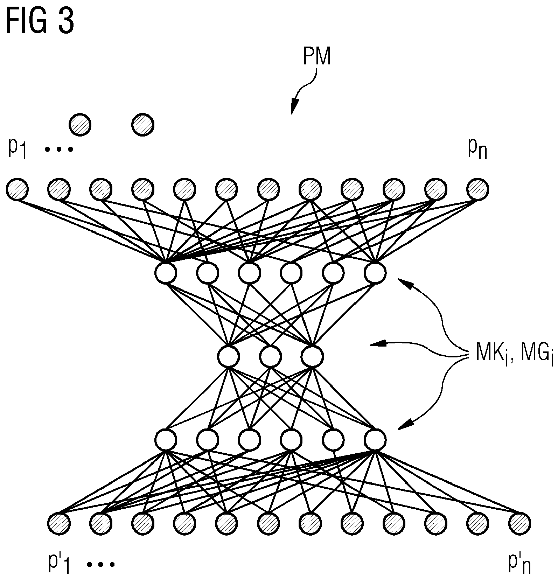

**Fig. 3** zeigt ein Beispiel für ein Prozess-Modell PM auf Basis maschinellen Lernens, konkret in Form eines Autoencoders.

Mehrere Eingangs-Knoten mit den Eingangs-Gewichten $p_1$ - $p_n$ und Ausgangs-Knoten mit den Ausgangs-Gewichten $p'_1 - p'_n$ sind über mehrere Modell-Knoten $MK_i$ verbunden und bilden so einen Autoencoder.

Jeder Modell-Knoten $MK_i$, das heißt Eingangs-Knoten, Ausgangs-Knoten und Knoten dazwischenliegender Lagen, weist ein jeweils zugeordnetes Modell-Gewicht $MG_i$ in Form eines numerischen Werts auf.

Das Prozess-Modell PM wird erzeugt und mithilfe von Prozessdaten des Herstellungsprozesses trainiert.

Die Prozessdaten PD-R und PD-A können durch Sensoren erzeugt werden und bilden durch entsprechende numerische Messwerte Zustände im Herstellungsprozess ab, wie beispielsweise Betriebstemperatur, Betriebsdruck, Stromaufnahme, Produkteigenschaften des hergestellten Produkts wie erfasste Abmessungen des hergestellten Produkts.

Der Rekonstruktionsfehler RF kann im Schritt e) durch folgenden Zusammenhang ermittelt werden:

$$RF = \sqrt{(p_1 - p_1')^2 + (p_2 - p_2')^2 + \cdots}$$

**Bezugszeichenliste:**

AL    Alarm
CPU    Rechenvorrichtung
FB    Feedback, Rückkopplung
J    Ergebnis der Prüfung ist Ja
MEM    Speicher
$MG_i$    Modell-Gewicht für Modell-Knoten i
$MK_i$    Modell-Knoten i
N    Ergebnis der Prüfung ist Nein
$p_1$ - $p_n$    Eingangs-Gewicht eines Eingangs-Knotens
$p_1' - p_n'$    Ausgangs-Gewicht eines Ausgangs-Knotens
PD-A    aktuelle Prozessdaten
PD-R    Referenz-Prozessdaten
PM    Prozess-Modell, Autoencoder
PROD    Produktionsanlage, führt Herstellungsprozess aus

**Patentansprüche**

1. Computer-implementiertes Verfahren zur Erkennung von Abweichungen in einem Herstellungsprozess mit Prozessparametern, wobei eine Rechenvorrichtung (CPU) mit einem Speicher (MEM) vorgesehen ist, **dadurch gekennzeichnet, dass** folgende Schritte ausführt werden:

a) Bereitstellen von Referenz-Prozessdaten eines Referenz-Herstellungsprozesses, welcher Referenz-Parameter des Herstellungsprozesses umfasst, an die Rechenvorrichtung (CPU),
b) Erzeugen und Trainieren eines Prozess-Modells mit Modell-Knoten ($MK_i$) und zugeordneten Modell-Gewichten ($MG_i$) auf Basis eines Autoencoders mit den Referenz-Prozessdaten,
c) Zumindest teilweises Zuordnen von Modell-Knoten des Prozess-Modells zu Prozessparametern des Herstellungsprozesses,
d) Bereitstellen von aktuellen Prozessdaten aus einem aktuellen Herstellungsprozess, welcher aktuelle Parameter des Herstellungsprozesses umfasst, an die Rechenvorrichtung (CPU),
e) Ermitteln von Prozess-Abweichungen der aktuellen Prozessdaten mithilfe des Prozess-Modells durch Bestimmung eines Rekonstruktionsfehlers und Ausgeben der Modell-Gewichte

($MG_i$) der Modell-Knoten ($MK_i$),
f) Schätzen des zukünftigen Verlaufs des Rekonstruktionsfehlers aus dem aktuell bestimmten Rekonstruktionsfehler und zumindest eines vorher bestimmten Rekonstruktionsfehlers für eine vorbestimmte Zeitdauer, und Speichern des Rekonstruktionsfehler im Speicher (MEM) als zumindest ein vorher bestimmter Rekonstruktionsfehler für eine nachfolgende Schätzung,
g) Prüfen, ob der geschätzte zukünftige Verlauf des Rekonstruktionsfehlers für die vorbestimmte Zeitdauer innerhalb eines vorbestimmten Wertebereichs liegt, falls Ja (J), fortsetzen bei Schritt d), sonst (N) Ausgeben eines Alarms (AL).

2. Verfahren nach dem vorhergehenden Anspruch, wobei im Autoencoder nichtlineare Modell-Knoten ($MK_i$) verwendet werden, vorzugsweise mithilfe einer Sigmoid- oder einer ReLU-Funktion.

3. Verfahren nach einem der vorhergehenden Ansprüche, wobei der zumindest eine vorher bestimmte Rekonstruktionsfehler im Schritt f) Null beträgt, falls der Verfahrensschritt f) erstmalig ausgeführt wird.

4. Verfahren nach einem der vorhergehenden Ansprüche, wobei das Schätzen mithilfe eines Regressionsverfahrens erfolgt.

5. Rechenvorrichtung (CPU) zur Erkennung von Abweichungen in einem Herstellungsprozess mit Prozessparametern, umfassend einen Speicher (MEM), welche dazu eingerichtet ist das Verfahren nach einem der vorhergehenden Ansprüche auszuführen.

6. System (S) zur Erkennung von Abweichungen in einem Herstellungsprozess mit Prozessparametern, umfassend eine Produktionsanlage (PROD) und eine Vorrichtung (CPU) nach dem vorhergehenden Anspruch.

7. Computerprogramm, umfassend Befehle, welche bei deren Ausführung durch einen Computer diesen veranlassen, das Verfahren nach einem der Ansprüche 1 bis 3 auszuführen.

8. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 3 durchführen.

9. Datenträgersignal, welches das Computerprogramm nach Anspruch 6 überträgt.

FIG 1

```
┌─────────┐
│   a)    │
└─────────┘
     │
     ▼
┌─────────┐
│   b)    │
└─────────┘
     │
     ▼
┌─────────┐
│   c)    │
└─────────┘
     │
     ▼
┌─────────┐
│   d)    │
└─────────┘
     │
     ▼
┌─────────┐        ┌─────────┐
│   e)    │───────▶│  $MG_i$ │
└─────────┘        └─────────┘
     │
     ▼
┌─────────┐
│   f)    │
└─────────┘
     │
     ▼
   J ◇ N          ┌─────────┐
     g)  ────────▶│   AL    │
                  └─────────┘
```

FIG 2

```
                                        S
┌──────────┐   PD-R   ┌──────────────┐
│          │   PD-A   │              │
│   PROD   │─────────▶│     CPU      │
│          │          │   ┌──────┐   │
│          │◀─────────│   │ MEM  │   │
└──────────┘   FB     └───┴──────┴───┘
                              │
                              ▼
                             AL
```

## FIG 3

PM

$p_1$ ... $p_n$

$MK_i, MG_i$

$p'_1$ ... $p'_n$

Europäisches
Patentamt

European
Patent Office

Office européen
des brevets

# EUROPÄISCHER RECHERCHENBERICHT

**Nummer der Anmeldung**

**EP 22 15 3511**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/275642 A1 (TAJIMA YOSHIYUKI [JP] ET AL) 27. September 2018 (2018-09-27) * Absätze [0002], [0003], [0104], [0106] – [0110], [0123]; Abbildung 13 * ----- | 1-9 | INV. G05B23/02 |
| X | CN 113 671 917 A (INST AUTOMATION CAS) 19. November 2021 (2021-11-19) * Absätze nach der Überschrift "Summary of the invention" bis zur Überschrift "The beneficail aspects of the present invention" in der Beschreibungseinleitung * ----- | 1-9 | |
| A | US 2019/302707 A1 (GUO JIANLIN [US] ET AL) 3. Oktober 2019 (2019-10-03) * Absätze [0047] – [0049], [0071] * ----- | 1-9 | |
| | | | **RECHERCHIERTE SACHGEBIETE (IPC)** G05B |

Der vorliegende Recherchenbericht wurde für alle Patentansprüche erstellt

| Recherchenort | Abschlußdatum der Recherche | Prüfer |
|---|---|---|
| **München** | **29. Juni 2022** | **Messelken, M** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 3511

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2022

| Im Recherchenbericht angeführtes Patentdokument | Datum der Veröffentlichung | Mitglied(er) der Patentfamilie | Datum der Veröffentlichung |
|---|---|---|---|
| US 2018275642 A1 | 27-09-2018 | CN 108628281 A | 09-10-2018 |
| | | EP 3379360 A2 | 26-09-2018 |
| | | JP 7017861 B2 | 09-02-2022 |
| | | JP 2018160093 A | 11-10-2018 |
| | | US 2018275642 A1 | 27-09-2018 |
| CN 113671917 A | 19-11-2021 | KEINE | |
| US 2019302707 A1 | 03-10-2019 | CN 111902781 A | 06-11-2020 |
| | | EP 3776113 A1 | 17-02-2021 |
| | | JP 7012871 B2 | 28-01-2022 |
| | | JP 2021509995 A | 08-04-2021 |
| | | TW 201942695 A | 01-11-2019 |
| | | US 2019302707 A1 | 03-10-2019 |
| | | WO 2019187297 A1 | 03-10-2019 |

EPO FORM P0461

Für nähere Einzelheiten zu diesem Anhang : siehe Amtsblatt des Europäischen Patentamts, Nr.12/82